Europäisches Patentamt

European Patent Office

Office européen des brevets

(19)

(11) Veröffentlichungsnummer: **0 009 638**
**B1**

(12) **EUROPÄISCHE PATENTSCHRIFT**

(45) Veröffentlichungstag der Patentschrift: **28.12.83**

(21) Anmeldenummer: **79103261.8**

(22) Anmeldetag: **04.09.79**

(51) Int. Cl.³: **C 08 F 12/02, C 08 F 2/02,
C 08 F 255/06,
C 08 F 279/02**

(54) Verfahren zur kontinuierlichen Massepolymerisation von Alkenyl-aromaten.

(30) Priorität: **12.09.78 DE 2839563**

(43) Veröffentlichungstag der Anmeldung:
**16.04.80 Patentblatt 80/8**

(45) Bekanntmachung des Hinweises auf die Patenterteilung:
**28.12.83 Patentblatt 83/52**

(84) Benannte Vertragsstaaten:
**BE DE FR GB IT NL**

(56) Entgegenhaltungen:
**FR - A - 1 206 795
FR - A - 1 410 243
FR - A - 2 220 543
FR - A - 2 336 423
FR - A - 2 377 420
GB - A - 1 233 079
US - A - 3 679 651**

(73) Patentinhaber: **HOECHST AKTIENGESELLSCHAFT
Postfach 80 03 20
D-6230 Frankfurt am Main 80 (DE)**

(72) Erfinder: **Walkenhorst, Wilfried, Dr.
Wiesbadener Strasse 12
D-6240 Königstein/Taunus (DE)**
Erfinder: **Gauer, Richard
Werner-Hilpert-Strasse 14
D-6200 Wiesbaden (DE)**
Erfinder: **Wild, Gerhard, Dr.
Johannesallee 8
D-6230 Frankfurt am Main 80 (DE)**
Erfinder: **Müller, Walter, Dr.
Im Stückes 68
D-6233 Kelkheim (Taunus) (DE)**

Verfahren zur kontinuierlichen Massepolymerisation von Alkenylaromaten

Styrolpolymerisate finden heute als glasklares Polystyrol, als Copolymerisat mit Acrylnitril (SAN) und als schlagzähe Polymerisate (schlagzähes Polystyrol, ABS), die als schlagzäh machende Komponente einen natürlichen oder synthetischen Kautschuk enthalten, weite Anwendungsgebiete.

Der Bedeutung dieser Werkstoffe entsprechend wurde eine Vielzahl von Verfahren zu ihrer Herstellung entwickelt. Aus ökonomischen Gründen geschieht die Herstellung dieser Produkte vorzugeweise in kontinuierlichen Masseverfahren, die gegebenenfalls unter Zusatz von bis zu 20% eines inerten Verdünnungsmittels betrieben werden. Die Initiierung erfolgt thermisch oder durch Zugabe von Radikalspendern.

Die Polymerisation wird gegebenenfalls in Gegenwart von Weichmachern, Reglern, Antioxydantien und anderen Zusatzstoffen ausgeführt.

Wesentlich für die Gebrauchseigenschaften aller polystyrolhaltigen Kunststoffe ist, daß das Molgewichtsmittel Werte von $150 \cdot 10^3$ bis $350 \cdot 10^3$ aufweist und die niedermolekularen Anteile unter $100 \cdot 10^3$ möglichst klein sind.

Es ist weiter bekannt, daß die Molgewichte und Molgewichtsverteilungen maßgeblich von der Reaktionstemperatur bestimmt werden. Die Polymerisation des Styrols verläuft mit einer Reaktionswärme von 175 kcal/kg exotherm. Eine vollkommen adiabatisch ablaufende Reaktion würde zu einer starken Selbstaufheizung der Masse um etwa 4°C je Prozent Styrolumsatz führen. Dem Fachmann ist dieser Vorgang als Durchgehen der Reaktion geläufig. Es führt zu einer starken Ausbildung von niedermolekularen Anteilen. Produkte, die aus einem derartigen Prozeß stammen, zeigen neben einer breiten Molgewichtsverteilung dürftige mechanische Eigenschaften.

Es ist daher erforderlich, zum Einhalten der jeweils optimalen Polymerisationstemperatur den größten Teil der Reaktionswärme aus dem polymerisierenden Gemisch zu entfernen.

Die mit zunehmender Polymerisationsdauer stark ansteigenden Viskositäten erschweren naturgemäß die Wärmeabfuhr über die Kesselwandungen. Es ist daher Stand der Technik, im niederviskosen Bereich die Polymerisation in Rührkesseln unter starker Rührung durchzuführen, wobei zusätzlich die Verdampfungswärme des siedenden Monomeren zur Kühlung des polymerisierenden Gemisches herangezogen werden kann.

Bei der Herstellung des glasklaren Homopolystyrols erlauben es die Viskositäten, bis zu einem Polymergehalt von etwa 70% im Rührkessel zu arbeiten. Die Herstellung von schlagzähem Polystyrol erfordert jedoch bereits bei Polymergehalten von 30 bis 50% die Verlagerung des polymerisierenden Gemisches aus dem stark gerührten Rührkessel in einen schwach gerührten Rohrreaktor, da sonst ein enormer Abfall im Weichphasengehalt der Produkte auftritt.

Diese Erscheinung ist in der US—PS 3.243.481 beschrieben.

Zur Verbesserung des Wärmeaustausches in den schwach gerührten Rohrreaktoren enthalten diese gegebenenfalls noch umfangreiche Wärmetauscherelemente. Ein derartiger Reaktor ist in der US—PS 2.727.884 beschrieben. Reaktoren dieser Art sind als schlanker Kessel anzusehen, die quer zur Längsachse liegende Wärmetauscherrohre aufweisen. Zwischen diesen Lagen der Wärmetauscherrohre sind langsam laufende Rührer angeordnet, deren Aufgabe in einer Verbeserung des Wärmetransports bestehen soll. Bei ungenügender Rührung kann es zur Kanalbildung (channeling) in Fließrichtung des Materials kommen, die dazu führt, daß monomerreiche Anteile in Temperaturzonen gelangen, die auf ein Reaktionsgut mit wenig Monomer eingestellt sind. Die Folge davon sind breite Molgewichtsverteilungen und ein Durchgehen der Reaktion.

Die US—PS 3.243.481 beschreibt ein Verfahren zur Herstellung von schlagfestem Polystyrol unter Einsatz der vorstehend beschriebenen Reaktoren. Eine styrolische Kautschuklösung, die ein inertes Verdünnungsmittel und gegebenenfalls noch Weichmacher enthält, wird kontinuierlich in einem Rührkessel bis zu einem Polymergehalt umgesetzt, der das zweifache des eingesetzten Kautschuks ausmacht. Dieses Vorpolymerisat wird kontinuierlich aus dem Kessel abgezogen und in Rohrreaktoren der oben beschriebenen Art, die in Serie angeordnet sind, bis zu einem Polymergehalt von 80 bis 95% umgesetzt und schließlich in einer Aufarbeitungsstufe von flüchtigen Anteilen befreit.

Die DE—OS 1770 392 offenbart ein ähnliches Verfahren zur Herstellung von styrolhaltigen Polymerisaten. Hier erfolgt die Vorpolymerisation bis zu einem Feststoffgehalt von 35% zweistufig, d.h. in zwei hintereinander angeordneten Rührkesseln (zweistufige Rührkesselkaskade).

Anschließend erfolgt die Auspolymerisation (Fertigpolymerisation) in zwei in Serie angeordneten Rohrreaktoren. Die bei diesem Verfahren erziehlte Raum-Zeit-Ausbeute beträgt etwa 82 kg je Stunde und je Kubikmeter Reaktionsvolumen.

Das in der DE—OS 25 39 605 beschriebene ähnliche Verfahren erlaubt Raum-Zeit-Ausbeuten von etwa 79 kg je Stunde und je Kubikmeter Reaktionsvolumen.

Diese Raum-Zeit-Ausbeuten liegen recht niedrig. Außerdem sind die verwendeten Reaktoren wegen ihrer Kombination von Rührern und Wärmetauschern kompliziert und störanfällig.

Der vorliegenden Erfindung liegt die Aufgabe zu Grunde, ein Verfahren zur Herstellung von styrolhaltigen Polymerisaten zu entwickeln, das nicht mit den beschriebenen Nachteilen behaftet ist.

Es wurde ein Verfahren zur kontinuierlichen Homo- bzw. Copolymerisation von Styrol in Masse gefunden, das bei einer hohen Raum-Zeit-Ausbeute Produkte mit einem günstigen Eigenschaftsbild liefert.

Gefunden wurde ein Verfahren zur Herstellung von alkenylaromatischen Homo- oder Copolymerisaten durch thermisch oder mittels Radikalspendern initiierte kontinuierliche Massepolymerisation einer alkenylaromatischen Verbindung oder eines Gemisches von alkenylaromatischen Verbindungen, gegenbenenfalls in Gegenwart eines Nitrils oder Esters der Acryl- oder Methacrylsäure und/oder eines natürlichen oder synthetischen Kautschuks, in einer ein-, zwei- oder mehr-stufigen kontinuierlichen Vorpolymerisation und einer anschließenden ein-, zwei- oder mehr-stufigen kontinuierlichen Hauptpolymerisation, und abschließende Aufbereitung, dadurch gekennzeichnet, daß die Hauptpolymerisation in einem oder zwei oder mehreren hintereinander horizontal oder vertikal angeordneten Rohrreaktoren durchgeführt wird, die mittels eines Wärmeaustauschmediums temperierbare Einbauten enthalten, die aus sich in Achsrichtung des Gehäuses (1) erstreckenden Rohren (2) bestehen, die gekrümmte Rohrteile (2b) und diese gekrümmten Rohrteile (2b) verbindende Rohrteile (2a) aufweisen, wobei die Rohre (2) parallel zueinander und in zueinander parallelen Ebenen liegen und die verbindenden Rohrteile (2a) benachbarter Rohre (2) sich kreuzen.

Nach dem erfindungsgemäßen Verfahren polymerisierbare alkenylaromatische Verbindungen sind: Styrol, α-Methylstyrol, am Benzolring alkylsubstituierte Styrole wie o, m-, p-Vinyltoluol, die verschiedenen isomeren Vinylxylole, o-, m-, p-Äthylvinylbenzol, am Benzolring halogenierte Styrole wie o-, m-, p-Chlor bzw. -Brom-vinylbenzol, ferner die entsprechenden Verbindungen, in denen der Benzolring hydriert ist, z.B. Vinylcyclohexan, 1-Methyl-2-vinylcyclohexan, 1-Methyl-3-vinylcyclohexan, 1-Methyl-4-vinylcyclohexan usw.

Es können auch Gemische der genannten Verbindungen copolymerisiert werden oder auch Gemische der genannten Verbindungen mit einem Nitril oder dem Ester eines aliphatischen Alkohols (mit 1 bis 8 C-Atomen) der Acryloder Methacrylsäure.

Ferner können Lösungen eines natürlichen oder synthetischen Kautschuks wie Polybutadien, Polyisopren, Butadien-Styrol-Kautschuk, Äthylen-Propylen-Dien (konjugiert oder nicht konjugiert)-Kautschuk, in welchem des Dien beispielsweise Hexadien-1,4, Dicyclopentadien, 5-Äthylidennorbornen-2 oder ein anderes 5-Alkylidennorbornen-2 ist, in einer der genannten alkenylaromatischen Verbindungen oder in einem Gemisch dieser Verbindungen untereinander oder mit einem der genannten Derivate der (Meth)acrylsäure pforpfcopolymerisiert werden.

Vorzugsweise werden Styrol oder Gemische von Styrol mit α-Methylstyrol, Acrylnitril und/oder einem der genannten Kautschuke polymerisiert.

Die Polymerisation wird entweder thermisch oder durch bekannte Initiatoren, die bei ihrem Zerfall freie Radikale liefern wie Azoverbindungen, z.B. Azodiisobutyronitril oder Peroxide, z.B. Benzoylperoxid und seine Derivate oder Lauroylperoxid, initiiert.

Die Dosierung der Initiatoren erfolgt zweckmäßig durch Auflösen im Monomeren oder in der Monomerenmischung.

Den Monomeren können noch bekannte Regler zur Einstellung des Molgewichts, z.B. Mercaptane oder dimeres α-Methylstyrol, zugesetzt werden, ferner auch bekannte Weichmacher wie Weißöle oder verschiedene Ester der Phthalsäure, sowie übliche Antioxydantien und UV-Stabilisatoren.

Man kann den Monomeren auch inerte Verdünnungsmittel zusetzen, z.B. aromatische Kohlenwasserstoffs wie Äthylbenzol, Toluol, Xylole oder Benzol.

Die Vorpolymerisation des Monomeren oder des Monomerengemisches erfolgt in einem oder zwei oder mehreren (in Serie angeordneten), kontinuierlich durchströmten Rührkesseln bei einer Temperatur von etwa 373 bis etwa 423 K, vorzugsweise etwa 388 bis etwa 413 K bei thermischer Initiierung, und etwa 323 bis etwa 373 K, vorzugsweise etwa 333 bis etwa 353 K bei Verwendung von Radikalspendern als Initiatoren.

Dem (ersten) Vorpolymerisationskessel wird kontinuierlich ein gleichbleibender Strom von Monomer bzw. Monomergemisch, das noch weitere Zusätze (wie oben beschrieben) enthält, zugeführt.

Bei Verwendung von mehr als einem Vorpolymerisationskessel wird aus dem ersten Kessel kontinuierlich ein gleichbleibender Materialstrom ausgetragen und dem zweiten zugeführt und so fort.

Aus dem (letzten) Vorpolymerisationskessel wird kontinuierlich ein gleichbleibender Strom an Vorpolymerisat ausgetragen und der Hauptpolymerisation zugeführt.

Der bei Verwendung von einem Rührkessel in diesem bzw. bei zwei oder mehr Rührkesseln im zweiten oder letzten Rührkessel sich einstellende stationäre Polymergehalt beträgt zweckmäßig 20 bis 70 Gew.-%, vorzugsweise 30 bis 60 Gew.-%, bie Abwesenheit eines Kautschukes und vorzugsweise 25 bis 35 Gew.-% bei Gegenwart eines Kautschuks. Bei der Verwendung von mehr als einem Vorpolymerisationskessel ist es möglich, den Gesamtumsatz in der Vorpolymerisation beliebig auf die Kessel aufzuteilen.

Als Vorpolymerisationskessel finden die handelsüblichen, mit Manteltemperierung und Rührwerk ausgerüsteten Apparate Verwendung.

Die Hauptpolymerisation wird in einem oder zwei oder mehreren hintereinander horizontal oder vertikal angeordneten Rohrreaktoren durchgeführt, die eine Vielzahl von temperierbaren statischen Mischeinbauten enthalten.

Die Hauptpolymerisations-Reaktoren bestehen aus einem mit temperierbarem Mantel, beispielsweise einem mittels eines Temperiermediums temperierbaren Doppelmantel, versehenen rohrartigen Gehäuse mit für die mischende und gleichzeitige wärmetauschende Behandlung des durchströenden Gemisches bestimmten Einbauten. Diese Einbauten bestehen aus sich in Achsrichtung des Gehäuses (1) erstreckenden Rohren (2), die gekrümmte Rohrteile (2b) und diese gekrümmten Rohrteile (2b) verbindende Rohrteile (2a) aufweisen. Die Rohre (2) liegen parallel zueinander und die verbindenden Rohrteile (2a) benachbarter Rohre (2) kreuzen sich.

Die gekrümmten Rohrteile (2b) und die verbindenden Rohrteile (2a) eines Rohres (2) liegen außerdem in einer Ebene, und die so gebildeten Ebenen verlaufen parallel zueinander.

In einer bevorzugten Ausführungsform des Reaktors reichen die gekrümten Rohrteile (2b) an das Gehäuse mit vorzugsweise kreisrundem Querschnitt heran, die verbindenen Rohrteile (2a) sind gerade und diese geraden verbindenden Rohrteile (2a) benachbarter Rohre (2) kreuzen sich rechtwinklig.

Die Rohreinbauten können aus hintereinander geschalteten Rohrbündeln bestehen, die gegeneinander um die Gehäuse-achse, vorzugsweise um 90°C, verdreht sind.

Besonders vorteilhaft ist es, wenn die gekrümmten Rohrteile (2b) noch zusätzlich mit Leitblechen (4, 4a) versehen sind.

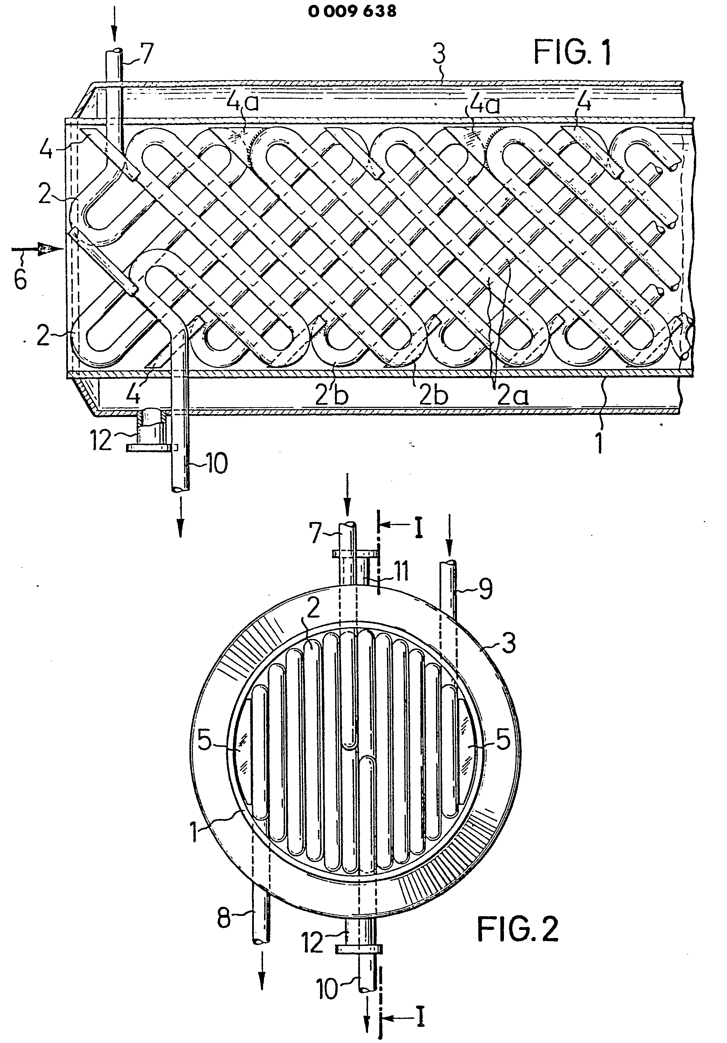

Figur 1 zeigt dem Schnitt I—I von Figur 2, Figur 2 eine Frontansicht des Reaktors im Schnitt. Im Gehäuse (Reaktorgehäuse) 1, das mit einem Doppelmantel 3 versehen sein kann, sind sich in Achsrichtung des Gehäuses erstreckende Rohreinbauten (2) für die gleichzeitige mischende und wärmetauschende Behandlung des den Reaktor durchströmenden Gemisches angeordnet. Die Rohre (2) weisen gerade Rohrteile (2a) und gekrümmte Rohrteile (2b) auf, die je Rohr in einer Ebene liegen. Die durch die Rohre gebildeten Ebenen liegen parallel zueinander. Die geraden Rohrteile (2a) benachbarter Rohre (2) kreuzen sich (hier vorzugsweise gezeigt) unter einem Winkel von etwa 90°; größere und kleinere Winkel sind ebenfalls möglich.

Jedes Rohr (2) ist mit einem Zulauf (7) und einem Ablauf (10) für ein Wärmetauschmedium versehen.

Zweckmäßig sind einzelne Rohre 2 an ihren Enden verbunden, um möglichst wenig Zuläufe bzw. Abläufe durch die Gehäusewand führen zu müssen. Bei der Ausführung gemäß Figur 2 sind jeweils die Rohre einer Hälfte zusammengefaßt und mit Zuläufen 7 und 9 und Abläufen 8 und 10 versehen.

Bei Verwendung eines Gehäuses 1 mit kreisrundem Querschnitt ergeben sich Zwickel, in denen Einbauten, z.B. Leitbleche 5 angeordnet werden können.

Im ausgeführten Beispiel sind die gerade geführten Rohrteile 2a eines Rohres 2 zueinander parallel und gegen die Gehäuseachse um 45° geneigt. Es können auch andere Winkel als solche von 45° gewählt werden. Ferner sind Varianten möglich, bei denen die geraden Rohrteile (2a) eines Rohres (2) nicht jeweils parallel zueinander verlaufen.

Im ausgeführten Beispiel berühren sich benachbarte Rohre 2.

Das Mischen, die radiale Verteilung und die Gleichmäßigkeit der Verweilzeit des durch den Reaktor strömenden Gemisches über den gesamten Querschnitt des Reaktors können günstig beeinflußt werden, wenn im Bereich der gekrümmten Rohrteile 2b Leitelemente (4 und 4a) angeordnet werden.

6 bedeutet die Fließrichtung des durch den Reaktor strömenden Gemisches, 11 und 12 Öffnungen des Doppelmantels des Reaktors für Zulauf und Ablauf eines Wärmetauschmediums.

Das aus dem (letzten) Vorpolymerisationskessel ausgetragene Vorpolymerisat wird dem vorstehend beschriebenen (ersten) Hauptpolymerisations-Reaktor zugeführt und durchströmt diesen und gegebenenfalls weitere Reaktoren.

Die Anfangstemperatur beim Eintritt in den (ersten) Reaktor beträgt zweckmäßig 393 bis 423 K, vorzugsweise etwa 413 K. Bei fortschreitendem Durchströmen des (der) Reaktors (Reaktoren) steigt die Temperatur langsam an auf 443 bis 493 K, vorzugsweise 443 bis 463 K.

Beim Austritt aus dem (letzten) Reaktor ist ein Polymergehalt von 75 bis 95 Gew.-%, vorzugsweise 85 bis 90 Gew.-% erreicht.

Anschließend wird das erhaltene Gemisch aufgearbeitet. Vor allem erfolgt die Abtrennung von flüchtigen organischen Bestandteilen (nicht umgesetzten Monomeren, inerten Verdünnungsmitteln) beispielsweise in einem Vent-Extruder oder in einer Flash-Kammer. Beispielsweise ist es möglich, die Grobentgasung in einer Flash-Kammer und die Feinentgasung in einem Ventextruder durchzuführen, Schließlich erfolgt wie üblich die Granulierung des Produkts.

Das erfindungsgemäße Verfahren liefert hochwertige Produkte, da durch die statischen Einbauten ein enges Verweilzeitspektrum erzielt wird, das in Kombination mit dem gleichzeitig erfolgenden Wärmeaustausch eine besonders gleichmäßige und genaue Temperaturführung in dem Reaktionsgemisch erlaubt. Dadurch entstehen Produkte mit enger Molgewichtsverteilung. Insbesondere ist der Anteil an niedermolekularen Produkten sehr gering.

Anstelle der aufwendigen und wegen der beweglichen Teile (Rührer) störanfälligen Rohrreaktoren nach dem Stand der Technik werden verbesserte Reaktoren eingesetzt, die den weiteren Vorteil haben, daß überraschenderweise Raum-Zeit-Ausbeuten von >100 kg je h und m³ möglich sind, was einer Erhöhung von fast 30% entspricht. Das erfindungsgemäße Verfahren weist damit eine bessere Wirtschaftlichkeit auf.

Beispiel

Die Vorpolymerisation erfolgte in einem 250 1-Rührkessel, der mit Wendelrührer und Mantelheizung ausgestattet war. Die definierte Menge des Zulaufs wurde mit einer Dosiervorrichtung eingestellt; ebenso erlaubte eine weitere Vorrichtung die Kontinuierliche Entnahme einer bestimmten Menge Vorpolymerisat.

Der kontinuierliche Zulauf bestand aus einem Gemisch aus 84,485 Gew.-% Styrol, 9 Gew.-% eines handelsüblichen Polybutadien-Kautschuks mit etwa 50% trans-, etwa 40% cis- und etwa 10% 1,2-Vinyl-Konfiguration und einer Mooney-Viskosität $M_{L1+4}(100)$=etwa 35, 1,5 Gew.-% Mineralöl, 5 Gew.-% Äthylbenzol und 0,015 Gew.-% Laurylmercaptan. Der konstante Durchsatz betrug 65 kg/h. Bei einer mittleren Verweilzeit im Vorpolymerisationskessel von 1,4 h wurde bei einer Innentemperatur von 408 K und einer Drehzahl des Wendelrührers von 35 Upm ein stationärer Polymergehalt von 30 Gew.-% erzielt. Dieses Vorpolymerisat wurde kontinuierlich der Hauptpolyermisation zugeführt und durchlief kontinuierlich 3 Temperaturzonen.

Als Hauptpolymerisationsreaktor wurde ein erfindungsgemäß einzusetzender oben bereits näher beschriebener Reaktor mit kreisrundem Querschnitt verwendet. Der Reaktor war insgesamt 6 m lang und hatte einen inneren Durchmesser von 30 cm. Er enthielt als Einbauten 3 jeweils 2 m lange, gegeneinander um 90° verdrehte und getrennt temperierbare Rohrschüsse mit jeweils 5 Rohrlagen aus 38×3, 6 mm-Rohr. Die Rohrlagen berührten sich, die geraden Rohrteile (2a) benachbarter Rohrlagen kreuzten sich unter einem Winkel von 90° und die gekrümmten Rohrteile (2b) berührten die Reaktorwand. In den jeweils beiden Zwickeln waren Leitbleche (5) angeordnet. Das freie Gesamtvolumen des Reaktors betrug 3601 (3×1201).

Im Bereich des ersten Rohrschusses stieg die Temperatur vom Anfang zum Ende von 408 auf 418 K, im Bereich des zweiten Rohrschusses von 418 auf 433 K und im Bereich des dritten Rohrschusses von 433 auf 443 K an.

Die Gesamtverweilzeit betrug 5 h, der Polymergehalt am End des dritten Rohrschusses 89%.

Das aus dem Reaktor ausgetragene Polymerisat wurde in einem handelsüblichen Zweiwellen-Entgasungsextruder entgast und schließlich granuliert.

Das so erhaltene Endprodukt wies die folgenden Eigenschaften auf:

| | |
|---|---|
| Kautschukgehalt (%) | 10,1 |
| Weichphasengehalt (%) | 32 |
| RSV (dl/g) | 0,83 |
| $M_w/M_n$ | 2,5 |
| Schmelzindex $MFI_{200/5}$ (nach DIN 53735) (g/10 min) | 3,6 |
| Kugeldruckhärte (nach DIN 53456) (kp/cm²) | 76 |
| Vicattemperatur (nach DIN 53460) (°C) | 98 |
| Kerbschlagzähigkeit (nach DIN 53453) bei 0°C (kpcm/cm²) | 8,1 |
| Reißdehnung (nach DIN 53455) (%) | 82 |

Die Raum-Zeit-Ausbeute betrug 106 kg je h und m³ Reaktionsvolumen.

Der RSV-Wert (reduzierte spezifische Viskosität) wurde bei 25°C an einer Lösung von 1 g Styrolpolymerisat in 100 ml Toluol gemessen.

**Patentansprüche**

1. Verfahren zur Herstellung von alkenylaromatischen Homo- oder Copolymerisaten durch thermisch oder mittels Radikalspendern initiierte kontinuierliche Massepolymerisation einer alkenylaromatischen Verbindung oder eines Gemisches von alkenylaromatischen Verbindungen, gegebenenfalls in Gegenwart eines Nitrils oder Esters der Acryl- oder Methacrylsäure und/oder eines natürlichen oder synthetischen Kautschuks, in ein-, zwei- oder mehrstufigen kontinuierlichen Vorpolymerisation und einer anschließenden ein-, zwei- oder mehrstufigen kontinuiertlichen Hauptpolymerisation und abschließende Aufarbeitung, dadurch gekennzeichnet, daß die Hauptpolymerisation in einem oder zwei oder mehreren hintereinander horizontal oder vertikal augeordneten Rohrreaktoren durchgeführt wird, die mittels eines Wärmeauschtauschmediums temperierbare Einbauten enthalten, die aus sich in Achsrichtung des Gehäuses (1) erstreckenden Rohren (2) bestehen, die gekrümmte Rohrteile (2b) und diese gekrümmten Rohrteile (2b) verbindende Rohrteile (2a) aufweisen, wobei die Rohre (2) parallel zueinander und in zueinander parallelen Ebenen liegen und die verbindenen Rohrteile (2a) benachbarter Rohre (2) sich kreuzen.

2. Verfahren nach Anspruch 1, dadurch gekennzeichnet, daß Styrol homo- oder copolymerisiert wird.

3. Verfahren nach Anspruch 1, dadurch gekennzeichnet, daß Styrol mit α-Methylstyrol copolymerisiert wird.

4. Verfahren nach Anspruch 1 bis 3, dadurch gekennzeichnet, daß der Kautschuk ein Äthylen-Propylen-Dien-Kautschuk ist.

5. Verfahren nach Anspruch 4, dadurch gekennzeichnet, daß der Kautschuk ein Äthylen-Propylen-5-Äthylidennorbornen-2-Kautschuk ist.

## Revendications

1. Procédé de préparation d'homo- ou copolymères alcénylaromatiques par polymérisation continue en masse amorcée thermiquement ou au moyen de générateurs de radicaux d'un composé alcénylaromatique ou d'un mélange de composés alcénylaromatiques, le cas échéant en présence d'un nitrile ou d'un ester des acides acrylique ou méthacrylique et/ou d'un caoutchouc naturel ou synthétique, dans une prépolymérisation continue en un ou plusieurs stades, suivie d'une polymérisation principale continue en un ou plusieurs stades, puis d'un traitement final, caractérisé en ce que la polymérisation principale est effectuée dans un ou plusieurs réacteurs tubulaires disposés horizontalement ou verticalement les une derrière les autres, qui contiennent des chicanes pouvant être réglées en température au moyen d'un milieu échangeur de chaleur, se composant de tubes (2) s'étendant dans le sens de l'axe de l'enveloppe (1), lesquels présentent des parties de tuyaux recourbées (2b) et des parties de tuyaux (2a) raccordant ces parties de tuyaux recourbées (2b), les tuyaux (2) étant parallèles entre eux et disposés dans des plans parallèles entre eux et les parties de tuyaux de raccordement (2a) de tuyaux (2) voisins se croisant.

2. Procédé suivant la revendication 1, caractérisé en ce que l'on homo- ou copolymérise du styrène.

3. Procédé suivant la revendication 1, caractérisé en ce que l'on copolymérise du styrène avec de l'α-méthylstyrène.

4. Procédé suivant l'une quelconque des revendications 1 à 3, caractérisé en ce que le caoutchouc est un caoutchouc éthylène-propylène-diène.

5. Procédé suivant la revendication 4, caractérisé en ce que le caoutchouc est un caoutchouc éthylène-propylène-5-éthylidène-nor-bornène-2.

## Claims

1. Process for the manufacture of alkenylaromatic homo- or copolymers by continuous mass polymerization, initiated thermally or by means of free radical initiators, of an alkenylaromatic compound or a mixture of alkenylaromatic compounds, optionally in the presence of a nitrile or an ester of acrylic or methacrylic acid and/or a natural or synthetic rubber, with a one-, two- or multi-stage continuous prepolymerization and subsequent one-, two- or multi-stage continuous main polymerization and final working up, which comprises carrying out the main polymerization in one or two or more series-connected horizontal or vertical tube reactors in which internal fitments are located the temperature of which can be controlled by a heat exchange medium flowing through, wherein the fitments consist of tubes (2) which extend in the axial direction of the housing (1) of the reactor and possess curved tube portions (2b) and other tube portions (2a) connecting the curved portions (2b) and the tubes (2) are arranged parallel to one another and in planes being parallel to one another, with the connection tube portions (2a) of adjacent tubes (2) crossing one another.

2. The process of claim 1, wherein styrene is homo- or copolymerized.

3. The process of claim 1, wherein styrene is copolymerized with α-methylstyrene.

4. The process of claims 1 to 3, wherein the rubber is an ethylene-propylene-diene rubber.

5. The process of claim 4, wherein the rubber is an ethylene-propylene-5-ethylidene-nor-bornene-2 rubber.

FIG. 1

FIG. 2